# EUROPEAN PATENT SPECIFICATION

(11) **EP 0 628 979 B1**
(45) Date of publication and mention of the grant of the patent: **23.07.1997**
(21) Application number: 94107686.1
(22) Date of filing: 18.05.1994
(51) Int. Cl.: H01H 35/14, B60K 28/14

(54) **Battery cut-off device comprising an inertail switch**
Gerät mit einem Trägheitschalter zum Ausschalten einer Batterie
Dispositif équipé avec un interrupteur à inertie pour déconnecter une batterie

(30) Priority: 04.06.1993 IT MI931188
(43) Date of publication of application: 14.12.1994
(73) Proprietor: CAVIS S.r.l., Torino (IT)
(72) Inventor: Rubboli, Gianmario, I-22073 Fino Mornasco, Como (IT)
(74) Representative: Luksch, Giorgio, Dr.-Ing.

(56) References cited:
- DE-A- 1 465 179
- DE-A- 2 908 885
- DE-U- 9 200 034

## Description

This invention relates to an inertia device for interrupting the current supplied by a motor vehicle battery and in particular for interrupting the hot lines and those connected to the gasoline pump according to the preamble of the attached main claim.

Known devices of the aforesaid type are usually connected to the positive pole of the battery by a connection member comprising a metal bar, the ends of which are fixed by bolts to a positive terminal of the battery and to an input terminal of the device respectively.

Said connection member does not enable the device to be securely fixed to the battery, in that the device remains substantially suspended to the side of the battery. Consequently the device is subjected to vibrations which can compromise the device fixing and the correct operation of the inertia switch provided in the device. The operations involved in connecting the device to the battery are also relatively lengthy and difficult.

The point at which the connection member is fixed to the device also has generally a smaller cross-section than the internal components of the device, this causing a greater voltage drop and heating at the connection point than at the other parts of the device.

In DE 1 465 179 it is described an inertia device for interrupting the current supplied by a vehicle battery connected to the latter by a cable and comprising a casing for the housing of an inertia switch, a relay, a movable contact and fixed input and output contacts. The input contact is a screw whose threadened portion partially projects outside the casing.

For the connection of the battery cable to the input contact of the device, said threaded portion of the input contact cooperates with nuts and a forked element fixed to an end of said cable.

The connection of the battery cable to the input contact is relatively difficult and weighs upon the time needed for the assembly of the device into the vehicle.

Moreover, because of a possible oxidation of the nuts or the forked element and because of a possible unscrewing of the nuts, the electrical contact between input contact and battery cable may be difficult or even interrupted.

An object of the invention is to provide a device having a battery connection element which does not have to be fixed to an input terminal of the device but instead forms an integral part of the device electrical circuit, so as to facilitate, simplify and accelerate the operations involved in connecting the device to the battery, and prevent any constriction in the connection to the battery.

A further object of the invention is to provide a member for connecting the device to the battery which allows stable vibration-free fixing of the device.

These and further objects which will be apparent to an expert of the art are attained by a device in accordance with the accompanying claims.

The present invention will be more apparent from the accompanying drawings, which are provided by way of non-limiting example and in which:
Figure 1 is a schematic view of the casing of a device according to the invention with one of its two half-casings removed;
Figure 2 is a schematic perspective view of a device according to the invention associated with a battery;
Figure 3 is a schematic side view of a device according to the invention.

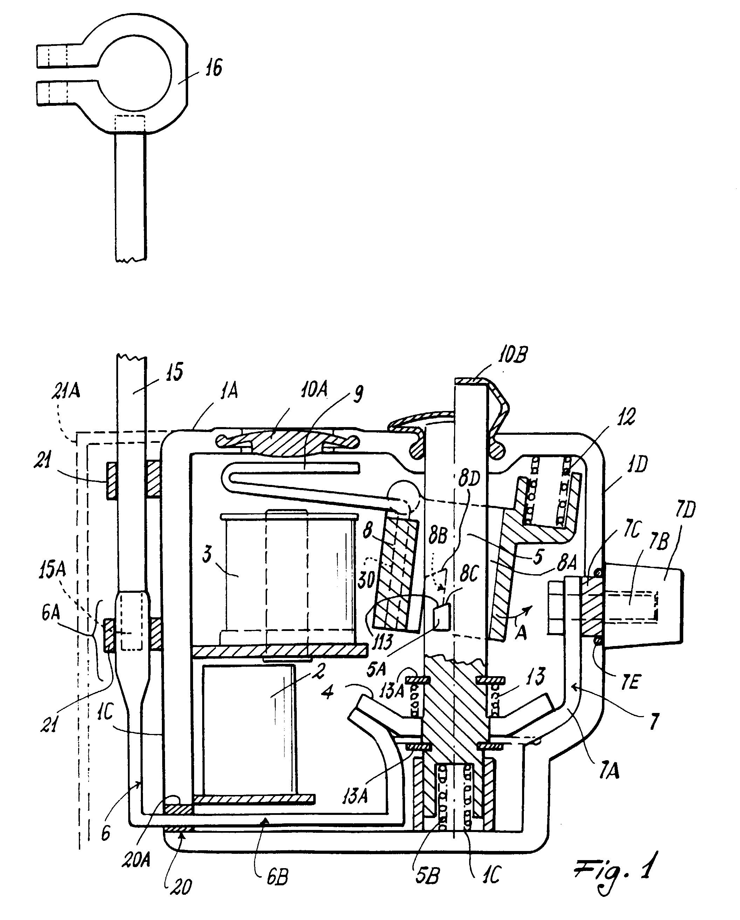

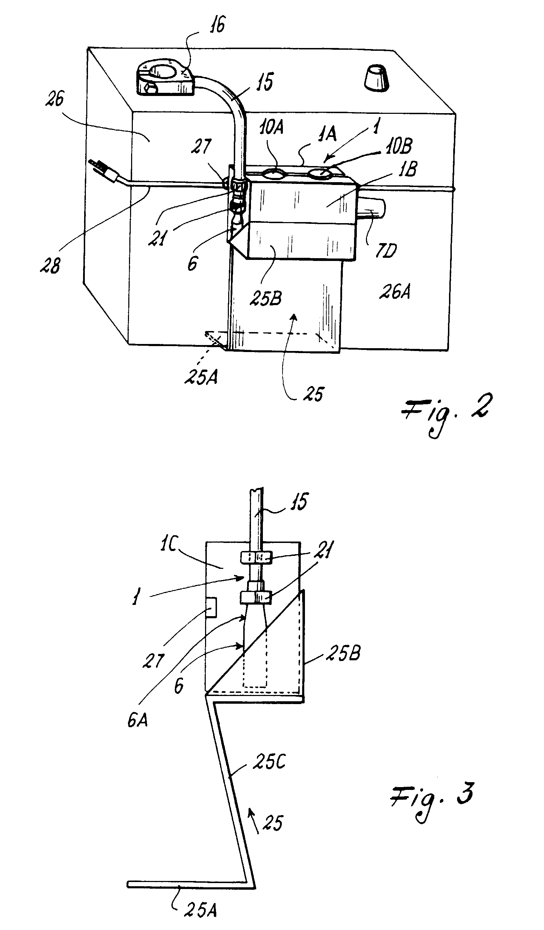

With reference to said figures, a device according to the invention comprises a box casing 1 (Figure 2) and a support element 25. The casing 1 comprises two half-casings 1A, 1B which can be connected together by screws, preferably of the disposable head type to prevent the device being opened once assembled. To improve the connection and seal of the two half-casings these can also be advantageously fixed together by electrowelding or by silicone adhesive.

Internally the two half-casings 1A, 1B (only one is shown in Figure 1) comprise a plurality of seats for the different components of the device. These latter comprise an inertia switch 2, preferably of the type manufactured by First Inertia Switch, an electromagnet 3 of normal type, and a movable contact 4 arranged to connect together a fixed input contact 6 and an output contact 7. The movable contact is mounted, against the action of a spring 13 and with its travel limited by rings 13A, on a cylindrical rod or pushbutton 5 of plastics material. Against the lower end of the pushbutton 5 there acts a compression spring 7 bearing against the base 1C of the half-casing. Half way along its length the rod or pushbutton 5 comprises two projections 5A (only one is visible in Figure 1) situated on a chord (and not on a diameter) of the rod and delimited upperly by an upwardly inclined surface or face 113, to give a partially uniform appearance to the projections in question. The device also comprises a support member 8, of plastics material, for the electromagnet armature 9.

This support member comprises a hole for passage of the rod 5, a seat 30 for the connection of the armature 9, and a seat for a return spring 12. Along two parallel side walls 8A (only one is visible in Figure 1) there are provided two seats or apertures 8B, one in each wall.

The seats 8B comprise a step 8C such that the projections 5A on the rod 5 can assume two different levels within the seats 8B depending on whether the movable contact 4 is closed or open.

All this is known, as is the electrical schematic diagram of the device (see for example Italian utility model 198,205 filed on 30.5.84 in the name of First Inertia Switch LTD).

The fixed input contact 6 in the device of the invention comprises a first substantially socket-shaped part 6A and a second part 6B substantially in the form of a flat bar integral with the socket. This latter is used to fix and electrically connect to the device one end 15A of a cable 15 connecting the device to the positive pole of the battery. The part 6B of the input contact comprises a first portion, extending from the socket, substantially parallel to a wall 1C of the device, and a second portion perpendicular to the first and substantially parallel to the base lC'of the casing, said second portion passing through an aperture in the wall 1C of the device casing, at which a seal gasket 20A is advantageously provided. Finally, the fixed input contact 6 comprises a third portion bent to cooperate with the movable contact 4.

It should be noted that with a contact of the aforesaid type, the input contact of the device becomes an integral part of the internal electrical circuit of the device, so that connection elements are no longer required between the cable 15 and the inner parts of the device, in contrast to known devices.

With that end of the cable 15 distant from the end 15A there is associated a conventional terminal clamp 16 for connecting the cable to one of the battery poles.

Advantageously the device casing comprises on its wall 1C a plurality of normal members 21 (only two are shown in Figure 1) for securing a part of the cable 15 and a part of the input contact element to the device casing.

These fixing members each comprise for example two semicylindrical pieces each associated with one of the device half-casings, the opposing ends of the two pieces being fixed together for example by insertion.

In this manner the input contact is securely fixed to the device casing. The fixing members 21 could also be replaced by two half-covers 21A (only one is shown in Figure 1) extending from the walls 1C of the half-casings 1A, 1B of the device. Each of said half-covers comprises seats for the cable 15 and the contact 5, which are thus also shielded.

The fixed output contact comprises a first substantially flat L-shaped part, one end of which cooperates with the movable contact 4 whereas its other end is connected to a terminal 7D by a screw 7B and washer 7C.

The washer 7C acts as a support for the terminal 7D, and in addition allows perfect clamping of this latter to the contact and prevents excessive loading of the device wall 1D.

The washer 7D has a smaller diameter than the major base of the terminal so that the outer edge of this latter base seals against the wall 1D.

A gasket 7E is advantageously provided to improve said seal.

The terminal 7D, the washer 7C and the screw 7B are preferably formed of brass.

Specifically, the terminal 7D is tinned and comprises knurling parallel to the screwing base to improve the grip of the usual battery cable connection clamps. The fact of providing terminals 7D of tinned brass rather than lead as is usual in vehicle batteries is advantageous from the environmental viewpoint, lead being a material relatively more polluting than brass. The terminal 7D could be fixed to the contact 7 in a manner different from that illustrated, and in particular could be formed integrally with the contact.

The device of the invention also comprises two pushbuttons 10A, B, for manually breaking the connection between the contacts 6, 4, 7 and for connecting said contacts together respectively.

The support element 25 (Figure 2) enables the casing 1 of the device to be secured to a vehicle battery 26. The support element comprises a first L-shaped part with a flange 25A to be inserted below the bottom of the battery, and a second part 25B comprising a seat for housing the device casing 1 and maintaining it in contact with a wall 26A of the battery.

Advantageously, as shown in Figure 3, the wall 25C of the first L-shaped part of the support element 25 is inclined to the flange 25A, for example by 5-6°, so that as the support is formed of a flexible plastics material, when the support is inserted below the battery the device casing 1 is "urged" against the battery wall 26A.

To improve the fixing of the device to the battery, on that wall of the device casing 1 in contact with the battery and with the seat 25B of the support element there are provided portions of a conventional closed cell biadhesive.

To further improve the connection between the battery and the casing 1, from the lateral walls 1C, 1D of this latter there extend eyelets 27 (partially shown in Figures 2 and 3) through which there is passed a usual plastics band 28 the ends of which comprise snap-connection means for these ends, the band being passed about the battery walls. The band in question can also be in the form of a nylon snap-connection strap commonly used in the automobile field.

It should be noted that because of the support 25 and the possible further aforedescribed connection means, the casing 1 is securely fixed to the battery in the most suitable position for correct operation of the inertia switch 2. It should also be noted that the contact achieved between the casing 1 and the battery also ensures good cooling of the device. The battery acts as a heat exchanger, being always located in a well ventilated part of the engine compartment.

Advantageously both the device casing 1 and the support 25 can be formed of self-extinguishing plastics material.

Finally it should be noted that the aforedescribed embodiment is given by way of example only, and that numerous modifications are possible all forming part of the same inventive concept; for example the casing 1 could be fixed to the vehicle body for example by screws passing through the eyelets 27 or other similar fixing means, and the inertia switch could be located outside the casing 1 in another suitable seat, and be connected to the relay 3, 9 by a cable.

## Claims

1. An inertia device for interrupting the current supplied by a vehicle battery and in particular for interrupting the hot lines and those connected to the gasoline pump, comprising: a casing (1) housing at least an inertia switch (2), a relay (3), a movable contact (4), a fixed input contact (6) and a fixed output contact (7); and a cable (15) for connecting the device to the battery, said input contact (6) comprising, externally to said casing (1), connection means (6A) to secure and electrically connect said cable (15), and, internally of said casing, a portion arranged to cooperate with said movable contact (4), the input contact being an integral part of the internal electrical circuit of the device; characterized in that said connection means are a substantially socket-like part (6A) of the input contact (6), said socket-like part (6A) receiving and fixing a free end (15A) of said cable (15) to form therewith an integral not-removable assembly; and in that the input contact (6) comprises a further flat part (6B), integral with the socket-like part (6B) and extending within said casing (1), said flat part comprising on its end said portion arranged to cooperate with the movable contact.

2. A device as claimed in claim 1, characterised by comprising a support element (25) for the device casing (1) the support element (25) associating said casing with one of the walls of the vehicle battery (26).

3. A device as claimed in claim 2, characterised in that the support element (25) comprises a flange (25A) to be inserted below the bottom of the battery, and a wall (25C) connecting the flange to a seat (25B) for containing said casing (1).

4. A device as claimed in claim 3, characterised in that the wall (25C) is inclined to the flange (25A).

5. A device as claimed in one of the preceding claims, characterised by comprising means (27, 28) for fixing the device casing (1) to a motor vehicle battery (26).

6. A device as claimed in claim 1, characterised in that the output contact (7) comprises at that end distant from the end cooperating with the movable contact (4) a terminal (7D) for connecting the terminal clamp of a feed cable for the vehicle main electrical circuit, the major base of said terminal at least partly resting on an intermediate metal element (7C) provided between said contact and said base.

7. A device as claimed in claim 6, characterised in that the terminal (7D) and the intermediate element (7C) are formed of brass, said terminal being tinned and comprising knurling parallel to said base.

8. A device as claimed in one of the preceding claims, characterised in that the casing (1) and the support element (25) are formed of a self-extinguishing plastics material.

9. A device as claimed in one of the preceding claims, characterised in that the device casing (1) comprises means (21, 21A) for securing to the casing at least the first part (6B) of the input contact (6) and a part of the cable (15).

## Patentansprüche

1. Trägheitsvorrichtung zur Unterbrechung des von einer Fahrzeugbatterie gelieferten Stroms und insbesondere zur Unterbrechung der wichtigen Leitungen und solcher, die mit der Benzinpumpe verbunden sind, mit: einem Gehäuse (1), in dem zumindest ein Trägheitsschalter (2) enthalten ist, einem Relais (3), einem bewegbaren Kontakt (4), einem feststehenden Eingangskontakt (6), einem feststehenden Ausgangskontakt (7) und einem Kabel (15) zur Verbindung der Vorrichtung mit der Batterie, wobei der Eingangskontakt (6) außerhalb des Gehäuses gelegene Verbindungseinrichtungen (6A) zur Anbringung und elektrischen Verbindung des Kabels (15) sowie einen innerhalb des Gehäuses gelegenen Bereich enthält, der dazu ausgestaltet ist, um mit dem bewegbaren Kontakt (4) zusammenzuwirken, wobei der Eingangskontakt ein integrierter Bestandteil des innenliegenden elektrischen Schaltkreises der Vorrichtung ist, dadurch gekennzeichnet, daß die Verbindungseinrichtungen ein im wesentlichen muffenähnliches Teil (6A) des Eingangskontaktes (6) enthalten, wobei durch das muffenähnliche Teil (6A) ein freies Ende (15A) des Kabels (15) aufgenommen und gehalten ist, um damit eine integrierte, nicht abnehmbare Anordnung zu schaffen, und daß der Eingangskontakt (6) ein weiteres flaches Teil (6B) enthält, das mit dem muffenähnlichen Teil (6A) integriert gebildet ist und sich in dem Gehäuse (1) erstreckt, wobei das flache Teil an seinem Ende einen Abschnitt hat, der dazu ausgestaltet ist, um mit dem bewegbaren Kontakt zusammenzuwirken.

2. Vorrichtung nach Anspruch 1, gekennzeichnet durch ein Halteelement (25) für das Gehäuse (1) der Vorrichtung, wobei das Halteelement (25) über eine der Wände der Fahrzeugbatterie (26) mit dem Gehäuse in Beziehung steht.

3. Vorrichtung nach Anspruch 2, dadurch gekennzeichnet, daß das Halteelement (25) einen Flansch (25A) zum Einsetzen unter dem Boden der Batterie und eine Wand (25C) hat, durch die der Flansch mit einem Sitz (25B) zur Aufnahme des Gehäuses (1) verbunden ist.

4. Vorrichtung nach Anspruch 3, dadurch gekennzeichnet, daß die Wand (25C) relativ zu dem Flansch (25A) geneigt ist.

5. Vorrichtung nach einem der vorhergehenden Ansprüche, gekennzeichnet durch Einrichtungen (27, 28) zur Befestigung des Gehäuses (1) der Vorrichtung an eine Fahrzeugbatterie (26).

6. Vorrichtung nach Anspruch 1, dadurch gekennzeichnet, daß der Ausgangskontakt (7) an dem Ende, das von dem Ende beabstandet ist, das mit dem bewegbaren Kontakt (4) zusammenwirkt, einen Anschluß (7D) aufweist, um die Anschlußklemme eines Versorgungskabels für den elektrischen Hauptschaltkreis des Fahrzeugs anzuschließen, und die Hauptfläche des Anschlusses zumindest teilweise an einem zwischenliegenden Metallelement (7C) anliegt, das zwischen dem Kontakt und der Fläche vorgesehen ist.

7. Vorrichtung nach Anspruch 6, dadurch gekennzeichnet, daß der Anschluß (7D) und das zwischenliegende Element (7C) aus Messing hergestellt sind, wobei der Anschluß verzinnt ist und parallel zu der Fläche eine Rändelung hat.

8. Vorrichtung nach einem der vorhergehenden Ansprüche, dadurch gekennzeichnet, daß das Gehäuse (1) und das Halteelement (25) aus einem selbstverlöschenden Kunststoffmaterial hergestellt sind.

9. Vorrichtung nach einem der vorhergehenden Ansprüche, dadurch gekennzeichnet, daß das Gehäuse (1) der Vorrichtung Einrichtungen (21, 21A) aufweist, um zumindest das ersten Teil (6B) des Eingangskontaktes (6) und ein Teil des Kabels (15) an dem Gehäuse zu befestigen.

## Revendications

1. Dispositif à inertie pour interrompre le courant fourni par la batterie d'un véhicule, en particulier pour interrompre les circuits sous tension ou ceux qui sont raccordés à la pompe à carburant, comprenant : un boîtier (1) renfermant au moins un interrupteur à inertie (2), un relais (3), un contact mobile (4), un contact d'entrée fixe (6) et un contact de sortie fixe (7) ; et un câble (15) pour relier le dispositif à la batterie, ledit contact d'entrée (6) comprenant, à l'extérieur dudit boîtier (1), un moyen de connexion (6A) pour fixer et raccorder électriquement ledit câble (15), et, à l'intérieur dudit boîtier, une partie prévue pour coopérer avec ledit contact mobile (4), le contact d'entrée étant une partie intégrante du circuit électrique interne du dispositif ; caractérisé en ce que ledit moyen de connexion (6A) est typiquement une pièce en forme de fiche femelle (6A) du contact d'entrée (6), ladite pièce en forme de fiche femelle (6A) recevant et immobilisant une extrémité libre (15A) dudit câble (15) pour former avec ce dernier un seul ensemble non amovible ; et en ce que le contact d'entrée (6) comprend une autre pièce (6B) de forme plate, partie intégrante de la pièce en forme de fiche femelle (6A), et qui se prolonge à l'intérieur dudit boîtier (1), ladite pièce plate comportant, à son extrémité, ladite partie prévue pour coopérer avec le contact mobile.

2. Dispositif selon la revendication 1, caractérisé en ce qu'il comprend un élément support (25) pour le boîtier (1) du dispositif, l'élément support (25) associant ledit boîtier à l'une des parois de la batterie (26) du véhicule.

3. Dispositif selon la revendication 2, caractérisé en ce que l'élément support (25) comprend une plaque (25A) prévue pour être insérée sous le fond de la batterie, et une paroi (25C) reliant la plaque à un logement (25B) recevant ledit boîtier (1).

4. Dispositif selon la revendication 3, caractérisé en ce que la paroi (25C) est inclinée par rapport à ladite plaque (25A).

5. Dispositif selon l'une quelconque des revendications précédentes, caractérisé en ce qu'il comprend des moyens (27, 28) permettant de fixer le boîtier (1) du dispositif sur la batterie (26) d'un véhicule à moteur.

6. Dispositif selon la revendication 1, caractérisé en ce que le contact de sortie (7) comprend, à l'extrémité opposée à celle qui coopère avec le contact mobile (4), une borne (7D) permettant le raccordement de la cosse d'extrémité d'un câble d'alimentation du circuit électrique principal du véhicule, la base principale de ladite borne reposant au moins partiellement sur un élément métallique intermédiaire (7C) prévu entre ledit contact et la dite base.

7. Dispositif selon la revendication 6, caractérisé en ce que la borne (7D) et l'élément intermédiaire (7C) sont fabriqués en laiton, ladite borne étant étamée et comportant un moletage parallèle à ladite base.

8. Dispositif selon l'une quelconque des revendications précédentes, caractérisé en ce que le boîtier (1) et l'élément support (25) sont fabriqués dans une matière plastique auto-extinguible.

9. Dispositif selon l'une quelconque des revendications précédentes, caractérisé en ce que le boîtier (1) du dispositif comprend des moyens (21, 21A) pour fixer sur le boîtier, au moins la première partie (6B) du contact d'entrée (6) et une partie du câble (15).
